# EUROPEAN PATENT SPECIFICATION

(11) **EP 1 801 016 B1**
(45) Date of publication and mention of the grant of the patent: **13.08.2008**
(21) Application number: 06126628.4
(22) Date of filing: 20.12.2006
(51) Int. Cl.: B65B 25/14, B65B 35/44, B65B 59/00, B65G 47/84

(54) **Machine for the production of groups of roll products.**
Maschine zur Herstellung von Rollenproduktgruppen
Machine pour la fabrication de groupes de produits en rouleau

(30) Priority: 20.12.2005 IT BO20050773
(43) Date of publication of application: 27.06.2007
(73) Proprietor: Tissue Machinery Company S.p.A., 40057 Granarolo Emilia (Bologna) (IT)
(72) Inventor: Dall'omo, Davide, 40132 Bologna (IT); Zagnoni, Christian, 40010, Calcara di Crespellano (Bologna) (IT)
(74) Representative: Lanzoni, Luciano

(56) References cited:
- EP-A- 1 067 048
- EP-A1- 1 306 308
- WO-A-96/07592

## Description

This invention relates to a machine for the production of groups of roll products, in particular, but without limiting the scope of the invention, rolls of toilet paper or kitchen paper.

It is very well known that machines of this kind for producing groups of roll products consist of a plurality stations, located in line along the machine itself, where the products are manipulated and divided up to form first the groups, of products and then the final packages.

In practice, the stations basically comprise:
- a unit for feeding the roll products;
- a unit for dividing the roll products into groups;
- a unit for wrapping and sealing the groups of products.

In addition to these, the production line may comprise a series of stations for conveying and positioning a plurality of these groups (also referred to as batch - which may include one or more wrapped groups of products) for the end of line stations where the batches can be bagged and palletized, ready for storage or transportation.

More specifically, the structures that prepare the products for the end of line stations normally comprise the following, in current machines: a system for conveying and, if necessary, diverting the products (with belts and related comb pushers); downstream of this system, there is a product straightening unit that turns each group of products by 90° and to form batches of product groups that are advanced by other comb pushers towards an end bagging machine (usually in a direction perpendicular to the direction in which the batches are fed to the straightening unit) or towards units for picking up and palletizing the groups of products.

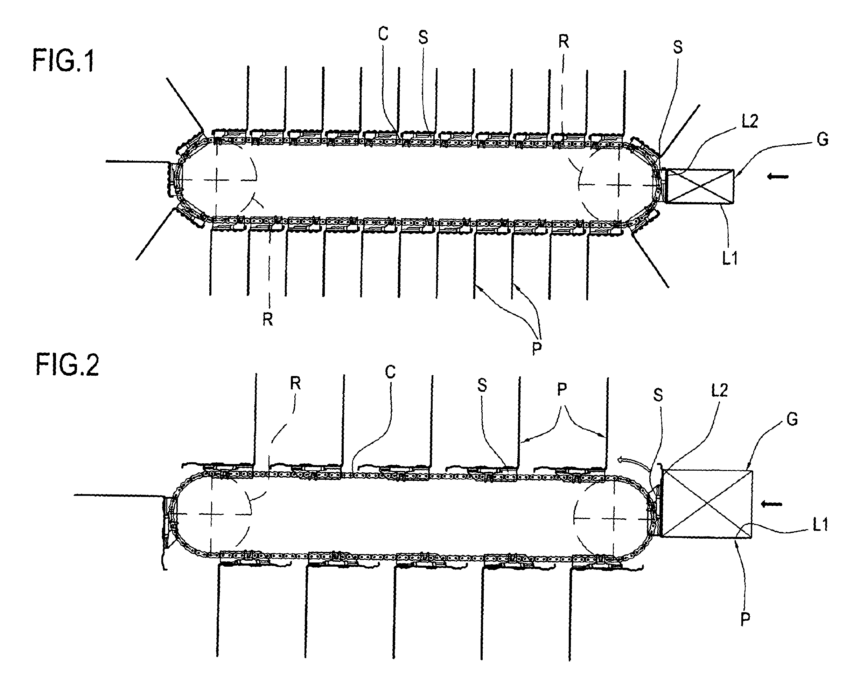

This specification is concerned in particular with the straightening unit, which may comprise the following (see Figures 1 and 2 illustrating two such units as known in prior art: a pair of parallel endless chains C trained around pairs of power-driven toothed wheels R; the chains C are associated with a plurality of paddles P, protruding radially from the chains C, for picking up, tipping up by 90° (from a "lying down" to an upright position) and moving the incoming groups of products G from the conveyor system. Each paddle P is substantially L-shaped to be able to stably accommodate one side L1 and the base L2 of the incoming group G and to turn the latter by ninety degrees.

The side of the paddle P that accommodates the base L2 is linked to a pair of guides S associated with the pair of chains C.

As clearly shown in Figures 1 and 2, the number and size of the paddles P mounted on the chains C varies in accordance with the size and configuration of the product groups G made by the machine.

At present, roll products come in several different diameter sizes and at least two different types of packs (single or double layer) which means that many sets of paddles P of different widths are required to handle all pack sizes (for current pack sizes, five different sets are used, distinguished by the different colours of the guides).

To this must be added the fact that the pack sizes vary in height according to the packing style, that is to say, the height may be that of a single product or the sum of different products placed one after the other within the same group of products.

In this case, too, the paddle dimension L1 must vary in length according to the product group G formed by the machine. At present, the product groups G available on the market come in seven different lengths.

The products can be variously combined to form at least thirty-five different configurations which the straightening unit must be able to handle.

The changeover procedure to be performed on this unit consists of the following steps: stopping the machine; removing all the products of the old configuration; manually disconnecting all the paddle P guides S from the chains C; and positioning another set of paddles P for the new configuration, also performed manually by the operator.

As may be inferred from this summary description, the changeover procedure for a straightening unit is a time-consuming, laborious task and, taking into account that changeovers in machines of this kind are quite frequent, that adds up to a considerable amount of down time, which in turn means a significant reduction in machine productivity as a whole.

Furthermore, EP-A-1 306 308 discloses a machine in accordance with the preamble of claim 1.

The aim of this invention is to overcome these disadvantages by providing a machine for the production of roll products equipped with a product group straightening unit that is extremely versatile and allows changeover to be performed quickly and without necessitating manual operations on the unit itself.

According to the invention, this aim is achieved by a machine for the production of groups of roll products comprising the technical characteristics described in one or more of the claims herein.

The technical characteristics of the invention, with reference to the above aims, are clearly described in the claims below and its advantages are apparent from the detailed description which follows, with reference to the accompanying drawings which illustrate preferred embodiments of the invention provided merely by way of example without restricting the scope of the inventive concept, and in which:
- Figures 1 and 2 are schematic side views showing two different operating configurations of a prior art station in a machine for the production of roll products;
- Figure 3 is a schematic perspective view from above of a part of the machine for producing product groups according to the invention;
- Figures 4 and 5 are, respectively, a schematic side view and a schematic top plan view of the detail E from Figure 3, that is to say, of a unit for straightening the groups of products according to the invention, in a first operating configuration;
- Figures 6 and 7 are, respectively, a schematic side view and a schematic top plan view of the detail E from Figure 3, that is to say, of a unit for straightening the groups of products according to the invention, in a second operating configuration;
- Figure 8 is a schematic front view, with some parts cut away, of the straightening station of Figure 4;
- Figure 9 shows a scaled-up detail from Figure 4 in a schematic side view;
- Figure 10 shows a scaled-up detail from Figure 6 in a schematic side view;
- Figure 11 is a schematic side view, with some parts cut away in order to better illustrate others, showing an alternative constructional detail of the straightening station illustrated in the drawings listed above;
- Figure 12 illustrates another embodiment of the straightening station of Figure 8.

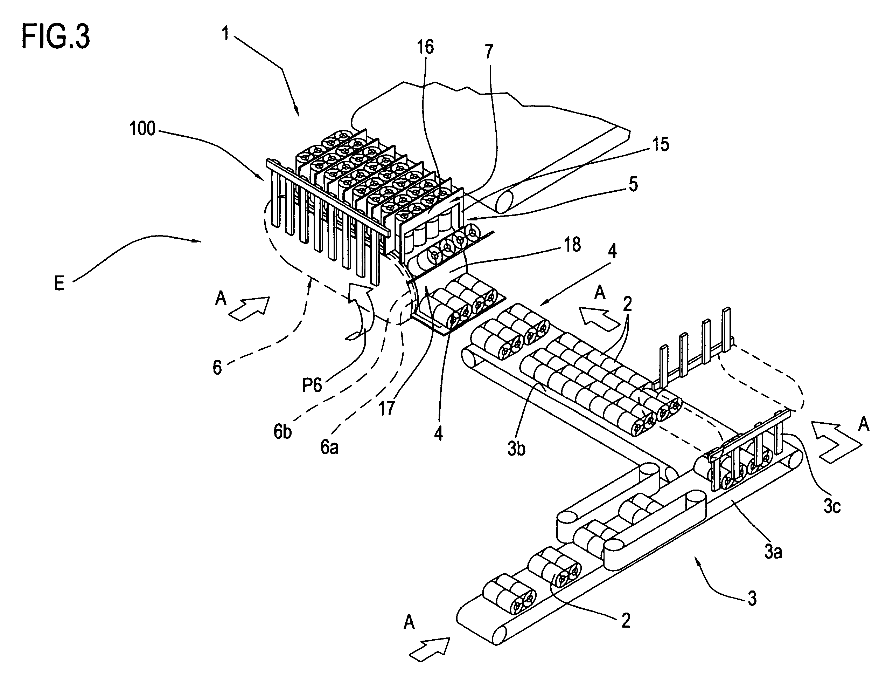

With reference to the accompanying drawings, and in particular Figures 3 to 7, the machine according to the invention is used to make groups 4 of products, especially but without restricting the scope of the invention, groups of roll products for household or bathroom use.

Each of the groups 4 consists of a plurality of products 2, arranged in groups defining a configuration (that varies in accordance with production requirements, as we shall see in more detail below), wrapped in a sheet of film and closed, for example by heat-sealing.

The forming of the individual groups 4 of products is not described or illustrated in this specification since it is accomplished by known stations and units that do not strictly form part of this invention.

The part of the machine which this specification is concerned with and which is labelled 1 in its entirety, comprises at least the following along a feed line A:
- a first unit 3 for conveying the product groups 4 one after the other towards
- a second unit 5 for picking up, turning and grouping a plurality of product groups 4.

The first unit 3 may be constructed in different ways, one constructional form being illustrated purely by way of example in Figure 3, and enables the groups 4 to be transferred from the stations where the groups 4 are made to the second unit 5 and, hence, to the end of line stations which are not illustrated or described here since they are of known type and do not fall within the scope of this invention.

The first unit 3 may consist of a pair of belts 3a and 3b positioned at an angle to each other to form a system for turning the product groups 4 through 90°. The product groups 4 are moved (and, if necessary, two or more groups are placed side by side) by comb pusher means 3c.

The second unit 5, consisting of a unit for "straightening" the product groups 4, is located downstream of the first unit 3.

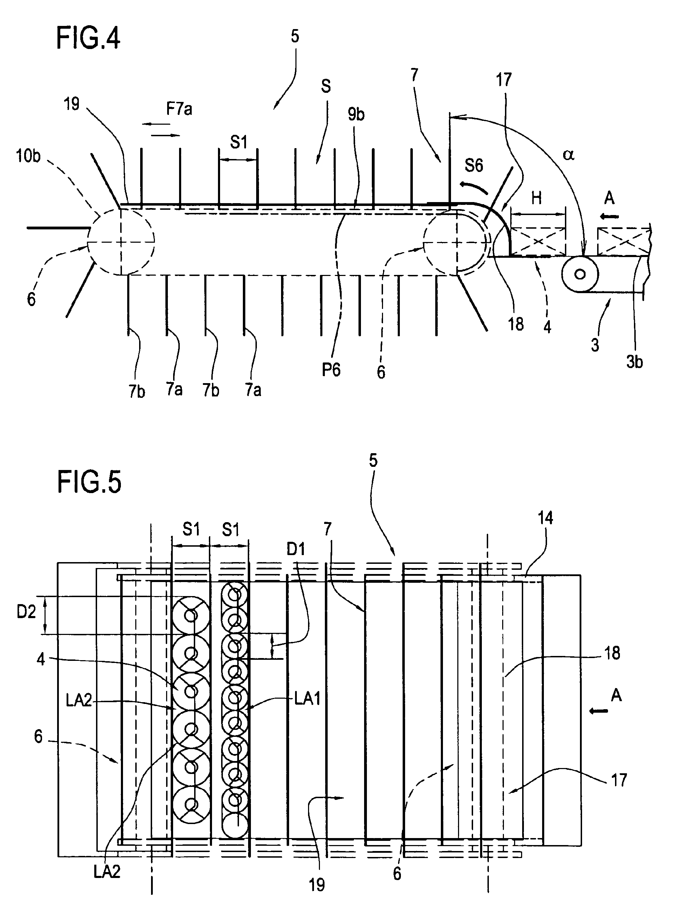

The second unit 5 (see Figures 3 to 7) comprises a motorised endless drive system 6 mounting a plurality of paddles 7 protruding radially from the path line P6 of the drive system 6; each paddle 7 forms, with the next one, a space S for receiving a product group 4 at a position where the paddle 7 is co-planar with the first unit 3, or more specifically, with the upper section 3b (see Figure 4) and is turned through an angle α of at least ninety degrees in the direction, indicated by the arrow S6, in which the drive system 6 advances.

Once turned, the product groups 4 are positioned side by side on the upper section of the drive system 6, and are then expelled from the respective spaces S by comb pusher means 100 which move them towards the end of line units (not illustrated).

As shown in Figures 4 to 11, in the second unit 5:
- each of the paddles 7 consists of an element divided into an upper section 16, constituting a part that supports and pushes the groups 4 of products, and an open lower section; and
- means 17 are provided for adjusting the supporting depth H7 of the product groups 4 on the paddles 7 according to the type of configuration, and act at least along an arc-shaped section of the paddle 7 drive path P6 between the above mentioned product group 4 pickup area, where each paddle 7 lies in the same plane as the first unit 3, and the position of the paddle 7 when it has been turned through the above mentioned right angle α.

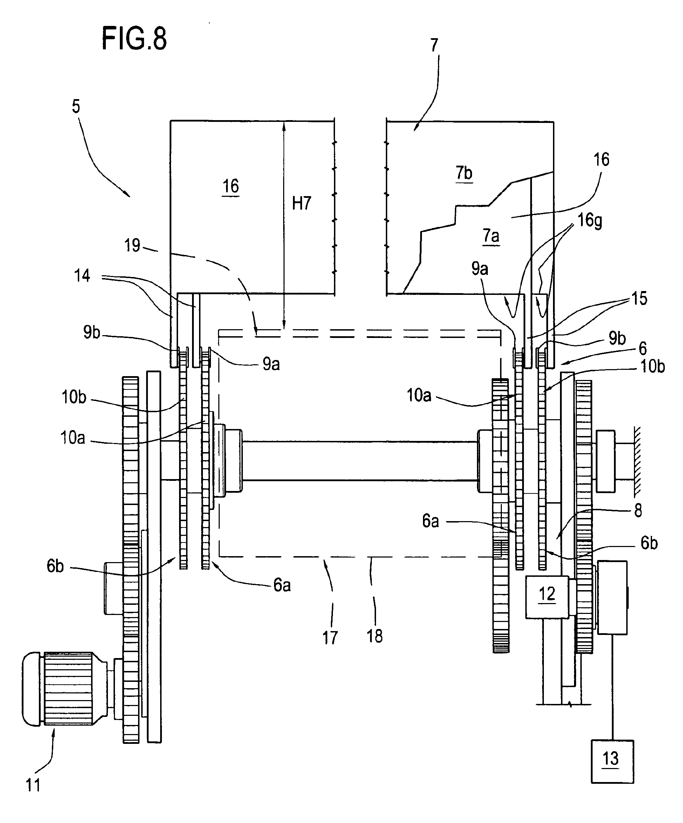

More specifically, (with reference also to Figures 8 to 10), each paddle 7 may consist of a flat member having the shape of an upturned U where the two legs 14 and 15 are connected to the drive system 6, and where the connecting section 16 of the U defines at least a part of the space for picking up and containing the product groups 4 and a central opening 16g.

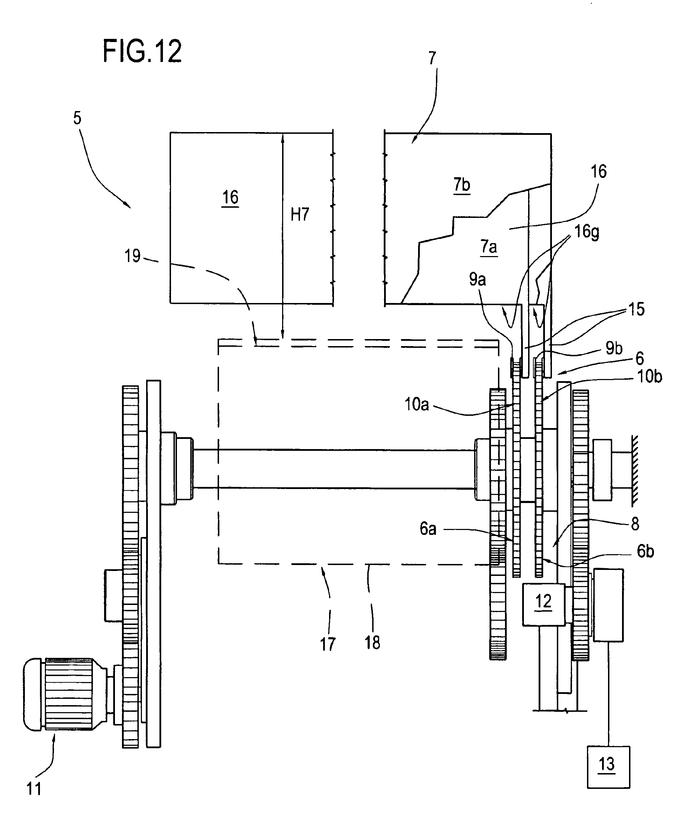

The U shape of the paddles 7 described in this specification is a preferred non-limiting embodiment of them and, as shown in Figure 12, the paddles 7 might not have the leg 14 and might be connected by the other leg only to a single drive system 6a or 6b, thus forming a rotated L shape: this would create a unit 5 with a lighter structure (without one of the wheel and chain drive systems) while maintaining the same level of operating efficiency.

The characteristic constructional form of each paddle 7, combined with the fact (as described in more detail below) that there is a set number of paddles 7, makes it possible to define this supporting depth adjustment on the second unit 5.

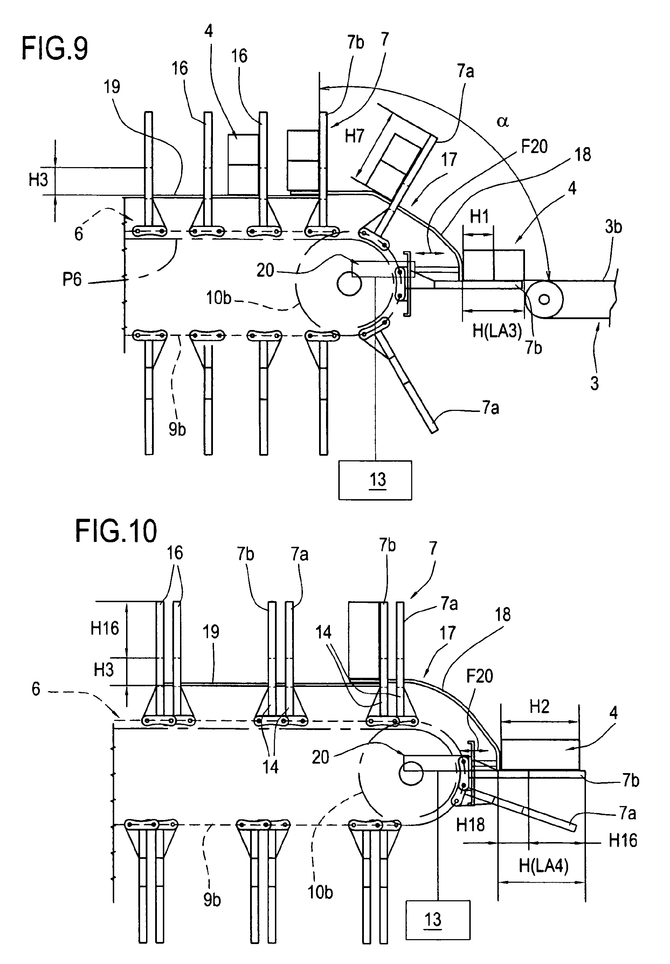

This adjustment is necessary because, besides the above mentioned configurations, the groups 4 of products 2 may have a plurality of additional configurations defined by a second dimension H (longitudinal dimension of the group 4) defined by the height or the sum of superposed heights of the wrapped roll products 2, and included at least between a third, minimum sub-configuration LA3 in which each product 2 has a first height H1 and a fourth, maximum sub-configuration LA4 in which each product 2 has a second height H2 that is greater than the first height H1 (see Figures 9 and 10).

More specifically (again see Figures 9 and 10), the means 17 for adjusting the supporting depth H7 of each paddle 7 may comprise, in a first embodiment:
- an arc-shaped surface 18 positioned and operating in the arc-shaped section of the path P6 at the opening 16g defined by the U shape of each passing paddle 7;
- a straight, static surface 19 forming the base of each containment space S and connected to the arc-shaped surface 18;
- first actuating means 20 for moving the arc-shaped surface 18 along the openings 16g of the paddles 7 between two or more operating positions (see arrows F20), according to configurations, included between a first, advanced minimum depth operating position, where the arc-shaped surface 18 is substantially in contact with the wall 16 of the passing paddles 7, and a second, retracted, maximum depth position where the arc-shaped surface 18 is away from the passing walls 16, so as to vary the supporting depth H7 of the passing paddles 7 according to the above mentioned third and fourth sub-configurations LA3 and LA4.

Obviously, in this situation, since the straight surface 19 is positioned at a fixed distance, it must be positioned at a distance H3 from the paddle 7 wall 16 that is smaller than the height H1 of the third, minimum sub-configuration LA3 so as to always allow contact of the wall 16 with any configuration after turning and then lowering the product group 4 along the wall 16 of the paddle 7 until contact with the surface 19.

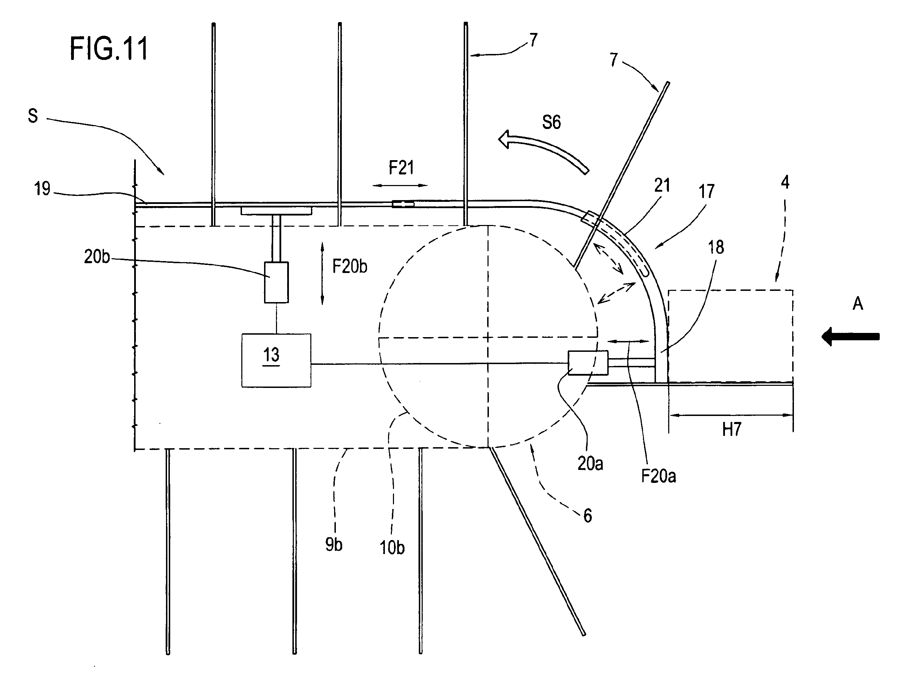

In an alternative embodiment (illustrated schematically in Figure 11), the means 17 for adjusting the supporting depth H7 of each paddle 7 may act both along the arc-shaped section and along a straight operating section of the path P6, that is to say, along the active sections of the second unit 5, so that the supporting depth H7 of each paddle 7 remains constant between the area where the product groups 4 are received and the area where the product groups 4 are expelled.

In this embodiment, the means 17 for adjusting the supporting depth H7 may comprise:
- the first arc-shaped surface 18 positioned and operating in the arc-shaped section of the path P6 at the opening 16g defined by the U shape of each passing paddle 7;
- a second, straight, mobile surface 19 forming the base of each containment space S and connected to the arc-shaped surface 18;
- actuating means 20 for moving both the arc-shaped surface 18 and the second surface 19 along the passing openings 16g between two or more operating positions, according to the configurations, included between the first, advanced minimum depth operating position and the second, retracted, maximum depth position.

In this alternative embodiment, the actuating means 20 may be divided into:
- first actuating means 20a acting on the first, arc-shaped surface 18 in such a way as to move it between the operating positions (see arrows F20a); and
- second actuating means 20b acting on the second, straight surface 19 in such a way as to move it in height between the operating positions in synchrony with the first actuating means 20a, while keeping the second surface 19 perpendicular to the passing paddles 7 at all times (see arrows F20b).

To keep the transition between the two surfaces 18 and 19 smooth, the surfaces 18 and 19 themselves are connected to each other by a third, flexible transition surface 21, with tubular cross section, which forms a telescoping sliding connection between the respective ends of the two surfaces 18 and 19, joined to the third surface 21 itself and permitting the double adjustment of the first and second surfaces 18 and 19 by causing the two surfaces 18 and 19 to slide relative to the third, flexible tubular surface 21 (see arrows F21).

Advantageously, the actuating means 20, 20a, 20b can be activated by the machine 1 control unit 13 so that all the adjustments described above are coordinated.

To enable all the above mentioned second configurations of the product groups 4 included between the third and fourth sub-configurations LA3 and LA4 to be picked up correctly:
- the depth H16 of the wall 16 must be at least equal to the height of the third, minimum sub-configuration LA3; and
- the wall 16 and the first arc-shaped surface 18 in the second, retracted maximum depth position must have a total depth H7 at least equal to the fourth, maximum sub-configuration LA4, that is to say, the sum of H16 (fixed) and H18 (variable, starting from the lower end of the wall 16) must be equal to the fourth, maximum sub-configuration LA4. The spacing between the configuration depth H7 adjustment surface 18 and the paddles 7 means that the surface 18 also acts as a means for relieving the stress created by the pressure on the packages already positioned on the paddles 7 (applied by the product groups 4 positioned on the first feed unit 3).

This is possible because the control unit 13 can control the actuating means 20, 20a and 20b in such a way as to enable a forward movement of the first, arc-shaped surface 18, past the predetermined height H, depending on the configuration, and then a guided return movement of the surface 18 itself with the advancing product groups 4 so as to produce said relief action during the feeding of the product groups 4 themselves.

This enables the paddles 7 to rotate the product groups 4 more easily since the paddle 7 does not have a base attached under it acting as a brake under the axial thrust of the product groups 4.

Still with reference to Figures 4 to 7, the second unit 5 also comprises:
- a set number of the paddles 7;
- a division of the paddles 7 into two distinct groups 7a and 7b, each of the groups 7a and 7b being connected respectively to a first and a second drive system 6a and 6b, in such a way that the paddles 7 of the two groups are positioned alternately along the endless path P6;
- means 8 for adjusting at least one of the two groups of paddles 7 - in this case, the one labelled 7a - relative to the other group 7b, in such a way as to define two different relative operating positions between the two groups 7a, 7b of paddles 7.

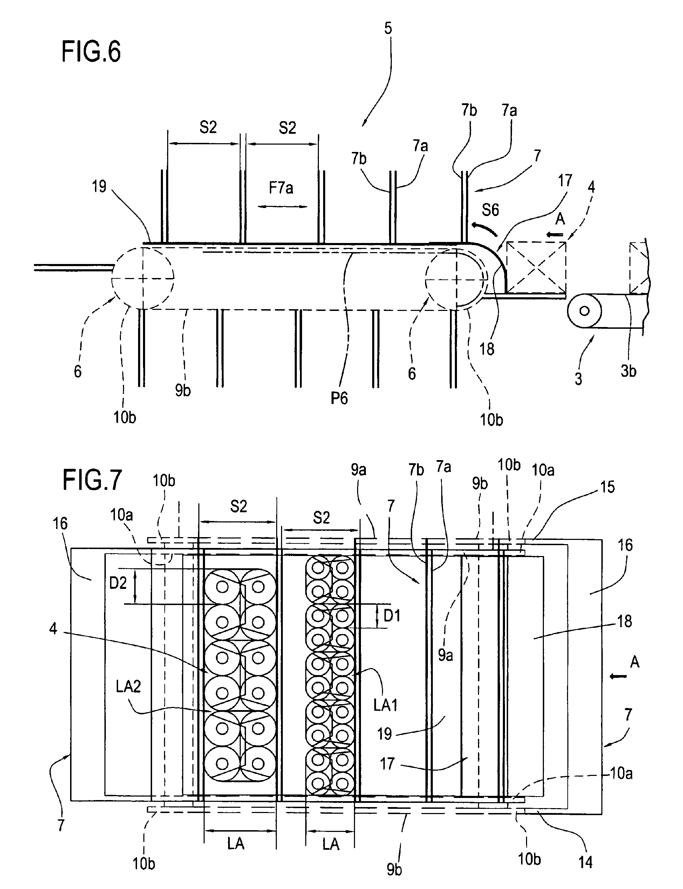

In the first position, the paddles 7 of the two groups 7a, 7b are equally spaced to form a working containment space S1 (see Figures 4 and 5), and in the second position, the paddles 7 of the two groups 7a, 7b are positioned close together in pairs to form a second working containment space S2 (see Figures 6 and 7) that is larger than the first containment space S1 defined by the first position. In other words, irrespective of the plurality of possible configurations of the product 2 groups 4 (which we will see in more detail below), there are only two positions that can be adopted by the paddles 7 - in a set number on the drive systems 6a and 6b - to define the transversal dimension of the spaces S.

More specifically, in the second operating position, only the group 7b of paddles 7 defines respective spaces S for containing the groups 4 of products 2.

Looking more closely at the details of the invention, the product groups 4 may have any of a plurality of different configurations according to a first (transversal) dimension LA and included at least between a first, single-layer configuration and a second, double-layer configuration of wrapped products 2 (shown in Figures 5 and 7); each first and second configuration being subdivided into two or more sub-configurations defined by a first, minimum sub-configuration LA1 in which each product 2 has a first diameter D1, and a second, maximum sub-configuration LA2 in which each product 2 has a second diameter D2 that is greater than the first diameter D1.

The two positions of the groups 7a and 7b of paddles 7 make it possible to accommodate all the above mentioned configurations and sub-configurations.

More specifically, at the first operating position, each paddle 7 of both groups 7a, 7b forms a first working containment space S1, defined as the distance between two consecutive paddles 7, designed to permit the passage and containment of the first configuration, including the respective sub-configurations between the first and the second, minimum and maximum sub-configuration LA1 and LA2 (again, see Figures 4 and 5).

At the second operating position, each paddle 7 of the group 7b (fixed) forms a second working containment space S2, defined as the distance between the working containment paddle 7 and the next or preceding paddle 7 placed side by side with the next or preceding working containment paddle 7, designed to permit the passage and containment of the second configuration, including the respective sub-configurations between the first and the second, minimum and maximum sub-configuration LA1 and LA2.

In short, the size of the spaces S1 and S2 delimited by the two possible positions of the groups 7a and 7b of paddles 7 must satisfy, for each grouping of single- and double-layer configurations, two essential conditions: the spaces S1 and S2 must be able to accommodate the second maximum sub-configuration LA2 (maximum overall and diameter dimension of the product 2) and the first sub-configuration LA1 (minimum overall and diameter dimension of the product 2) must not be able to turn round on itself (i.e. be positioned sideways or aslant) within the space S1 or S2 as the paddles 7 move around and during subsequent expulsion by the pusher means 100.

Looking in more detail at the operating structure, the first and second drive systems 6a and 6b each comprise (see Figure 8):
- two pairs 9a, 9b of endless drive chains trained around two respective pairs 10a, 10b of toothed wheels kinematically connected to each other and to a single motor 11; the pairs 9a, 9b of chains mount the first group 7a and the second group 7b of paddles 7, respectively;
- the above mentioned adjustment means 8 operating between the two pairs 9a, 9b of chains and the single motor 11.

Purely by way of example, without limiting the scope of the invention, the adjustment means 8 may comprise a mechanical clutch 12 positioned and acting on the drive system 6a and designed to change between two separate states, in the first of which the clutch 12 simultaneously transmits drive to both the drive systems 6a and 6b, causing the groups 7a, 7b of paddles 7 to move normally along the endless path P6, and in the second of which the clutch 12 does not transmit drive to one of the drive systems, namely, the one labelled 6b, so as to keep the respective group 7b of paddles 7 stationary while the group 7a of paddles 7 connected to the other drive system 6a moves in such a way as to vary its relative distance from the other group 7b of paddles 7 between the two above mentioned relative operating positions (see arrows F7a).

The mechanical clutch 12 may be operated manually or automatically by a machine 1 control unit 13, represented schematically as a block in the drawings.

The cascade connection with the toothed wheels of the two drive systems 6a and 6b is not described in detail since it is of known type.

In a machine with this structure, therefore, the straightening unit can be adjusted in two simple steps and without having to operate directly on the paddles or to change the paddles every time changeover is required.

The straightening unit, therefore, comprises a set number of paddles that can be adjusted, even automatically, in just two steps:
- the first step regards the transversal dimension (single or double layer, independently of the diameter of the products) between two paddle positions (close together or spaced apart);
- the other step regards the height of the products, adjusted using only the single arc-shaped section or the arc-shaped section and the mobile straight section in order to vary the supporting height of the product groups on the paddles, again quickly and easily and without having to substitute the paddles on the unit.

The straightening unit therefore fully achieves the aforementioned aims thanks to a simple, optimized structure that enables changeovers to be performed quickly and accurately without altering the basic architecture of the unit but optimizing and simplifying the cross adjustment system on the many possible product group configurations.

This significantly reduces unit down time due to changeovers, with obvious benefits in terms of machine productivity as a whole.

The invention described has evident industrial applications and can be modified an adapted in many ways without thereby departing from the scope of the invention as defined in the appended claims.

## Claims

1. A machine for the production of groups of roll products packaged and wrapped in a sheet of wrapping film and each consisting of a plurality of products (2) grouped together in a dimensionally variable configuration; the machine (1) being of the type comprising, along a feed line (A), a first unit (3) for conveying the product groups (4) one after the other towards a second unit (5) for turning and grouping a plurality of product groups (4) one after the other; the second unit (5) comprising at least an endless drive system (6) mounting a plurality of paddles (7) protruding radially from the path line (P6) of the drive system (6); each paddle (7) being adapted to form, with the next one, a space (S) for receiving a product group (4) at a pick up position where the paddle (7) is co-planar with the first unit (3) and to turn the groups through at least a right angle (α) in the feed direction (S6) of the drive system (6); the machine (1) being **characterised in that**:
- each of the paddles (7) in the second unit (5) consists of an element divided into an upper section (16), constituting a part that supports and pushes the groups (4) of products, and an open lower section;
- means (17) are provided for adjusting the supporting depth (H7) of the product groups (4) on the paddles (7) according to the type of configuration, comprising an arc shaped surface (18) acting at least along an arc-shaped section of the paddle (7) drive path (P6) and at the open lower sections of the paddles (7) between the above mentioned product group (4) pickup position, where each paddle (7) lies in the same plane as the first unit (3), and the position of the paddle (7) when it has been turned through the above mentioned right angle (α).

2. The machine according to claim 1, **characterised in that** each paddle (7) consists of an upturned U-shaped member where the two legs (14, 15) are connected to the drive system (6) and where the connecting section (16) of the U constitutes the part that supports and pushes the product groups (4).

3. The machine according to claim 1, **characterised in that** each paddle (7) of the first group (7a) and of the second group (7b) consists of a rotated L-shaped member where the vertical leg (15) is connected to the respective drive system (6a, 6b) and where the horizontal leg (16) of the L forms at least a part of the space for picking up and containing the product groups (4).

4. The machine according to claim 1, where the groups (4) of products (2) have a plurality of configurations defined by a second dimension (H) defined by the height or the sum of superposed heights of the wrapped roll products (2), and included at least between a third, minimum sub-configuration (LA3) in which each product has a first height (H1), and a fourth, maximum sub-configuration (LA4) in which each product (2) has a second height (H2) that is greater than the first height (H1), the machine being **characterised in that** each paddle (7) consists of an upturned U-shaped member where the two legs (14, 15) are connected to the drive system (6), and where the connecting section of the U constitutes the wall (16) of the that supports and pushes the product groups (4); the means (17) being provided for adjusting the supporting depth (H7) of the paddles (7) according to the type of configuration and acting at least along an arc-shaped section of the paddle (7) drive path (P6), constituting the other part that supports and stops the product groups (4), between the product group (4) pickup area, where each paddle (7) lies in the same plane as the first unit (3), and the position of the paddle (7) when it has been turned through the right angle (α).

5. The machine according to claims 1 to 4, **characterised in that** the means (17) for adjusting the supporting depth (H7) of each paddle (7) comprise:
- an arc-shaped surface (18) positioned and operating at least in the arc-shaped section of the path (P6) at the opening (16g) defined by each passing paddle (7);
- a straight, static surface (19) forming the base of each containment space (S) and connected to the arc-shaped surface (18);
- first actuating means (20) for moving the arc-shaped surface (18) along the openings (16g) between two or more operating positions, according to the configurations, included between a first, advanced minimum depth operating position, where the arc-shaped surface (18) is substantially in contact with the wall (16) of the passing paddles (7), and a second, retracted, maximum depth position where the arc-shaped surface (18) is away from the passing walls (16), so as to vary the supporting depth (H7) of the passing paddles (7) according to the configurations.

6. The machine according to claims 4 and 5, **characterised in that** the straight static surface (19) is positioned at a distance (H3) from the paddle (7) wall (16) that is smaller than the height (H1) of the third, minimum sub-configuration (LA3).

7. The machine according to claims 1 to 4, **characterised in that** the means (17) for adjusting the supporting depth of each paddle (7) are positioned on the arc-shaped section and along a straight operating section of the path (P6), that is to say, along the active sections, so that the supporting depth (H7) remains constant between the area where the product groups (4) are received and the area where the product groups (4) are expelled.

8. The machine according to claims 1 to 4 and according to claim 7, **characterised in that** the means (17) for adjusting the depth (H7) of each paddle (7) comprise:
- a first arc-shaped surface (18) positioned and operating in the arc-shaped section of the path (P6) at the opening (16g) in each passing paddle (7) ;
- a second, straight, upper mobile surface (19) forming the base of each containment space (S) and connected to the arc-shaped surface (18);
- actuating means (20) for moving the arc-shaped surface (18) and the second surface (19) along the passing openings (16g) between two or more operating positions, according to the configurations, included between a first, advanced minimum depth operating position, where the first surface (18) and the second surface (19) are substantially in contact with the walls (16) of the passing paddles (7), and a second, retracted, maximum depth position where the first surface (18) and the second surface (19) are away from the walls (16), so as to vary the supporting depth (H7) of each passing paddle (7) according to the configurations.

9. The machine according to claim 8, **characterised in that** the actuating means (20) are divided into:
- first actuating means (20a) acting on the first, arc-shaped surface (18) in such a way as to move it between the operating positions; and
- second actuating means (20b) acting on the second, straight surface (19) in such a way as to move it in height between the operating positions in synchrony with the first actuating means (20a) to keep the second surface (19) perpendicular to the passing paddles (7) at all times.

10. The machine according to claims 8 and 9, **characterised in that** the first arc-shaped surface (18) and the second straight surface (19) are connected to each other by a third, flexible transition surface (21), with tubular cross section, which forms a telescoping sliding connection between the respective ends of the first surface (18) and of the second surface (19), joined to the third surface (21) itself and permitting the double adjustment of the first surface (18) and second surface (19) by causing the two surfaces (18, 19) to slide relative to the third, flexible tubular surface (21).

11. The machine according to any of the claims from 5 to 10, **characterised in that** the actuating means (20, 20a, 20b) can be activated by a unit (13) for controlling the machine (1).

12. The machine according to any of the claims from 1 to 11, **characterised in that** the depth (H16) of the wall (16) is at least equal to the height of the third, minimum sub-configuration (LA3).

13. The machine according to any of the claims from 1 to 12, **characterised in that** the wall (16) and the first arc-shaped surface (18) in the second, retracted maximum depth position have a total depth (H7) at least equal to the fourth, maximum sub-configuration (LA4).

14. The machine according to any of the claims from 1 to 13, **characterised in that** the control unit (13) controls the actuating means (20, 20a, 20b) in such a way as to enable a forward movement of the first, arc-shaped surface (18), past the predetermined height (H), depending on the configuration, and a guided return movement of the surface (18) itself with the product groups (4) so that, as the product groups (4) advance, the stress created by the pressure on the product groups (4) being positioned on the paddle (7) applied by the product groups (4) positioned on the first feed unit (3) is relieved.

15. The machine according to claim 1, **characterised in that** the second unit (5) further comprises:
- a set number of paddles (7);
- a division of the paddles (7) into two distinct groups (7a, 7b), each of the groups (7a, 7b) being connected respectively to a first drive system (6a) and to a second drive system (6b), in such a way that the paddles (7) are positioned alternately along the endless path (P6);
- means (8) for adjusting one of the groups (7a) of paddles (7) relative to the other group (7b), in such a way as to define two different relative operating positions between the two groups (7a, 7b) of paddles (7), namely, a first position in which the paddles (7) of the two groups (7a, 7b) are equally spaced to form a working space (S1) for containing the product groups (4) and a second position in which the paddles (7) of the two groups (7a, 7b) are positioned close together in pairs to form a second working containment space (S2) that is larger than the first containment space (S1) defined by the first position.

16. The machine according to claim 15, **characterised in that** in the second operating position, only one group (7b) of paddles (7) forms a respective space (S) for containing the product groups (4).

17. The machine according to claim 15, where the product groups (4) have a plurality of different configurations according to a first dimension (LA) and included at least between a first, single-layer configuration and a second, double-layer configuration of wrapped products (2); each first and second configuration being subdivided into two or more sub-configurations included between a first, minimum sub-configuration (LA1) in which each product (2) has a first diameter (D1), and a second, maximum sub-configuration (LA2) in which each product (2) has a second diameter (D2) that is greater than the first diameter (D1), the machine being **characterised in that** at the first operating position, each paddle (7) of both groups (7a, 7b) forms a first working containment space (S1), defined as the distance between two consecutive paddles (7), designed to permit the passage and containment of the first configuration, including the respective sub-configurations between the first minimum sub-configuration (LA1) and the second, maximum sub-configuration (LA2).

18. The machine according to claim 15, where the product groups (4) have a plurality of different configurations according to a first dimension (LA) and included at least between a first, single-layer configuration and a second, double-layer configuration of wrapped products (2); each first and second configuration being subdivided into two or more sub-configurations included between a first, minimum sub-configuration (LA1) in which each product (2) has a first diameter (D1), and a second, maximum sub-configuration (LA2) in which each product (2) has a second diameter (D2) that is greater than the first diameter (D1), the machine being **characterised in that** at the second operating position, each paddle (7) of one group (7b) forms a second working containment space (S2), defined as the distance between the working containment paddle (7) and the next or preceding paddle (7) placed side by side with the next or preceding working containment paddle (7), designed to permit the passage and containment of the second configuration, including the respective sub-configurations between the first minimum sub-configuration (LA1) and the second, maximum sub-configuration (LA2).

19. The machine according to claim 15, **characterised in that** the first drive system (6a) and the second drive system (6b) each comprise at least:
- one pair (9a, 9b) of endless drive chains trained around a respective pair (10a, 10b) of toothed wheels kinematically connected to each other and to a single motor (11); the chains (9a, 9b) mounting the first group (7a) and the second group (7b) of paddles (7), respectively;
- the adjustment means (8) acting between the pair of chains (9a, 9b) and the single motor (11).

20. The machine according to claim 15, **characterised in that** the first drive system (6a) and the second drive system (6b) each comprise:
- two pairs (9a, 9b) of endless drive chains trained around two respective pairs (10a, 10b) of toothed wheels kinematically connected to each other and to a single motor (11); the pairs (9a, 9b) of chains mounting the first group (7a) and the second group (7b) of paddles (7), respectively;
- the adjustment means (8) acting between the two pairs of chains (9a, 9b) and the single motor (11).

21. The machine according to claims 15 and 19, **characterised in that** the adjustment means (8) comprise a mechanical clutch (12) positioned and acting on the drive system (6a) and designed to change between two separate states, in the first of which the clutch (12) simultaneously transmits drive to both the drive systems (6a, 6b), causing the groups (7a, 7b) of paddles (7) to move normally along the endless path (P6), and in the second of which the clutch (12) does not transmit drive to the drive system (6b), so as to keep the respective group (7b) of paddles (7) stationary while the group (7a) of paddles (7) connected to the other drive system (6a) moves in such a way as to vary its relative distance from the group (7b) of paddles (7) between the two relative operating positions.

22. The machine according to claim 21, **characterised in that** the mechanical clutch (12) can be operated manually.

23. The machine according to claim 21, **characterised in that** the mechanical clutch (12) can be operated automatically from a panel (13) for controlling the machine (1).

## Patentansprüche

1. Maschine zur Herstellung von Rollenproduktgruppen, die in eine Umhüllungsfolie verpackt und eingehüllt sind und jeweils aus mehreren Produkten (2) bestehen, die miteinander zu Formaten unterschiedlicher Abmessungen gruppiert werden; wobei die Maschine (1) von der Art ist, die entlang einer Vorschublinie (A) Folgendes beinhaltet: eine erste Einheit (3) zum Befördern aufeinander folgender Produktgruppen (4) zu einer zweiten Einheit (5) zum Drehen und Gruppieren mehrerer aufeinander folgender Produktgruppen (4); worin die zweite Einheit (5) zumindest ein Endlosantriebssystem (6) beinhaltet, auf dem mehrere Paddel (7) angebracht sind, die radial von der Pfadlinie (P6) des Antriebssystems (6) hervorstehen; worin jedes Paddel (7) dazu vorgesehen ist, mit dem nachfolgenden einen Raum (S) zu bilden, um eine Produktgruppe (4) an einer Aufnahmeposition entgegenzunehmen, an der das Paddel (7) koplanar mit der ersten Einheit (3) ist, und um die Gruppen um zumindest einen rechten Winkel (α) in Vorschubrichtung (S6) des Antriebssystems (6) zu drehen; wobei die Maschine (1) **dadurch gekennzeichnet ist, dass**:
- jedes Paddel (7) in der zweiten Einheit (5) aus einem Element besteht, das unterteilt ist in einen oberen Abschnitt (16), der einen Teil zur Auflage und zum Schieben der Produktgruppen bildet (4), und einen offenen unteren Abschnitt;
- Mittel (17) zur Regulierung der Auflagetiefe (H7) der Produktgruppen (4) auf den Paddeln (7) entsprechend des jeweiligen Formattyps, die eine bogenförmige Fläche (18) aufweisen und zumindest entlang eines bogenförmigen Abschnittes des Antriebspfades (P6) der Paddeln (7) und an den offenen unteren Abschnitten der Paddel (7) wirken, und zwar zwischen der oben genannten Position für die Aufnahme der Produktgruppen (4), in der jedes Paddel (7) auf derselben Ebene liegt wie die erste Einheit (3), und der Position, in der jedes Paddel (7) um den oben genannten rechten Winkel (α) gedreht ist.

2. Maschine nach Anspruch 1, **dadurch gekennzeichnet, dass** jedes Paddel (7) aus einem Element in Form eines umgedrehten "U" besteht, dessen zwei Schenkel (14, 15) mit dem Antriebssystem (6) verbunden sind und worin der Verbindungsabschnitt (16) der U-Form den Teil bildet, der zur Auflage und zum Schieben der Produktgruppen (4) dient.

3. Maschine nach Anspruch 1, **dadurch gekennzeichnet, dass** jedes Paddel (7) der ersten Gruppe (7a) und der zweiten Gruppe (7b) aus einem Element in Form eines gedrehten "L" besteht, dessen vertikaler Schenkel (15) mit dem entsprechenden Antriebssystem (6a, 6b) verbunden ist und worin der horizontale Schenkel (16) der L-Form zumindest einen Teil des Raumes für die Entgegennahme und Aufnahme der Produktgruppen (4) bildet.

4. Maschine nach Anspruch 1, worin die Gruppen (4) von Produkten (2) mehrere Formate aufweisen, die durch ein zweites Maß (H) definiert sind, das durch die Höhe oder die Summe übereinander liegender Höhen umhüllter Rollenprodukte (2) definiert ist, und die zumindest enthalten sind zwischen einem dritten, minimalen Unterformat (LA3), in dem jedes Produkt eine erste Höhe (H1) aufweist, und einem vierten, maximalen Unterformat (LA4), in dem jedes Produkt (2) eine zweite Höhe (H2) aufweist, die größer ist als die erste Höhe (H1), wobei die Maschine **dadurch gekennzeichnet ist, dass** jedes Paddel (7) aus einem Element in Form eines umgedrehten "U" besteht, dessen zwei Schenkel (14, 15) mit dem Antriebssystem (6) verbunden sind und worin der Verbindungsabschnitt der U-Form die Wand (16) des Teils bildet, der zur Auflage und zum Schieben der Produktgruppen (4) dient; wobei die Mittel (17), die zur Regulierung der Auflagetiefe (H7) der Paddel (7) entsprechend des jeweiligen Formattyps vorgesehen sind und die zumindest entlang eines bogenförmigen Abschnittes des Antriebspfades (P6) der Paddeln (7), der den anderen Teil zur Auflage und zum Anhalten der Produktgruppen (4) bildet, wirken, und zwar zwischen dem Bereich für die Aufnahme der Produktgruppe (4), in dem jedes Paddel (7) auf derselben Ebene liegt wie die erste Einheit (3), und der Position, in der das Paddel (7) um den rechten Winkel (α) gedreht ist.

5. Maschine nach den Ansprüchen 1 bis 4, **dadurch gekennzeichnet, dass** die Mittel (17) zur Regulierung der Auflagetiefe (H7) jedes Paddels (7) Folgendes beinhalten:
- eine bogenförmige Fläche (18), die zumindest an dem bogenförmigen Abschnitt des Pfades (P6) an der Öffnung (16g), die von jedem durchlaufenden Paddel (7) gebildet wird, angeordnet ist und wirkt;
- eine gerade, statische Fläche (19), die den Boden jedes Aufnahmeraums (S) bildet und mit der bogenförmigen Fläche (18) verbunden ist;
- erste Betätigungsmittel (20) zur Bewegung der bogenförmigen Fläche (18) entlang der Öffnungen (16g) zwischen zwei oder mehr Arbeitsstellungen, die den Formaten entsprechen und die enthalten sind zwischen einer ersten, ausgefahrenen Arbeitsstellung minimaler Tiefe, in der die bogenförmige Fläche (18) im Wesentlichen in Berührung mit der Wand (16) des durchlaufenden Paddels (7) ist, und einer zweiten, zurückgezogenen Stellung maximaler Tiefe, in der die bogenförmige Fläche (18) von den durchlaufenden Wänden (16) entfernt ist, so dass die Auflagetiefe (H7) der durchlaufenden Paddel (7) entsprechend der Formate variiert werden kann.

6. Maschine nach den Ansprüchen 4 und 5, **dadurch gekennzeichnet, dass** die gerade statische Fläche (19) in einem Abstand (H3) von der Wand (16) des Paddels (7) angeordnet ist, der kleiner ist als die Höhe (H1) des dritten, minimalen Unterformats (LA3).

7. Maschine nach den Ansprüchen 1 bis 4, **dadurch gekennzeichnet, dass** die Mittel (17) zur Regulierung der Auflagetiefe jedes Paddels (7) auf dem bogenförmigen Abschnitt und entlang eines geraden Nutzabschnittes des Pfades (P6) angebracht sind, also entlang der aktiven Abschnitte, so dass die Auflagetiefe (H7) zwischen dem Bereich der Entgegennahme der Produktgruppen (4) und dem Bereich der Ausgabe der Produktgruppen (4) konstant bleibt.

8. Maschine nach den Ansprüchen 1 bis 4 und nach Anspruch 7, **dadurch gekennzeichnet, dass** die Mittel (17) zur Regulierung der Tiefe (H7) jedes Paddels (7) Folgendes beinhalten:
- eine erste bogenförmige Fläche (18), die am bogenförmigen Abschnitt des Pfades (P6) an der Öffnung (16g) in jedem durchlaufenden Paddel (7) angeordnet ist und wirkt;
- eine zweite, gerade, obere bewegliche Fläche (19), die den Boden jedes Aufnahmeraums (S) bildet und mit der bogenförmigen Fläche (18) verbunden ist;
- Betätigungsmittel (20) zur Bewegung der bogenförmigen Fläche (18) und der zweiten Fläche (19) entlang der durchlaufenden Öffnungen (16g) zwischen zwei oder mehr Arbeitsstellungen, die den Formaten entsprechen und die enthalten sind zwischen einer ersten, ausgefahrenen Arbeitsstellung minimaler Tiefe, in der die erste Fläche (18) und die zweite Fläche (19) im Wesentlichen in Berührung mit der Wand (16) des durchlaufenden Paddels (7) sind, und einer zweiten, zurückgezogenen Stellung maximaler Tiefe, in der die erste Fläche (18) und die zweite Fläche (19) von den Wänden (16) entfernt sind, so dass die Auflagetiefe (H7) jedes durchlaufenden Paddels (7) entsprechend der Formate verändert werden kann.

9. Maschine nach Anspruch 8, **dadurch gekennzeichnet, dass** die Betätigungsmittel (20) unterteilt sind in:
- erste Betätigungsmittel (20a), die auf die erste bogenförmige Fläche (18) wirken, um sie zwischen den Arbeitsstellungen zu bewegen; und
- zweite Betätigungsmittel (20b), die auf die zweite, gerade Fläche (19) wirken, um diese in der Höhe zwischen den Arbeitsstellungen zu verstellen, und zwar synchron zu den ersten Betätigungsmitteln (20a), um die zweite Fläche (19) jederzeit rechtwinklig zu den durchlaufenden Paddeln (7) zu halten.

10. Maschine nach den Ansprüchen 8 und 9, **dadurch gekennzeichnet, dass** die erste bogenförmige Fläche (18) und die zweite gerade Fläche (19) über eine dritte, flexible Übergangsfläche (21) mit rohrförmigem Querschnitt miteinander verbunden sind, um eine teleskopartige Gleitverbindung für die jeweiligen Enden der ersten Fläche (18) und der zweiten Fläche (19) zu bilden, die mit der dritten Fläche (21) verbunden sind, so dass eine doppelte Regulierung der ersten Fläche (18) und der zweiten Fläche (19) ermöglicht wird, die durch das gleitende Verschieben der zwei Flächen (18, 19) im Verhältnis zu der dritten, flexiblen rohrförmigen Fläche (21) erzielt wird.

11. Maschine nach einem der Ansprüche von 5 bis 10, **dadurch gekennzeichnet, dass** die Betätigungsmittel (20, 20a, 20b) durch eine Einheit (13) zur Steuerung der Maschine (1) aktiviert werden können.

12. Maschine nach einem der Ansprüche von 1 bis 11, **dadurch gekennzeichnet, dass** die Tiefe (H16) der Wand (16) zumindest gleich der Höhe des dritten, minimalen Unterformates (LA3) ist.

13. Maschine nach einem der Ansprüche von 1 bis 12, **dadurch gekennzeichnet, dass** die Wand (16) und die erste bogenförmige Fläche (18) in der zweiten, zurückgezogenen Stellung maximaler Tiefe eine Gesamttiefe (H7) aufweisen, die zumindest gleich dem vierten, maximalen Unterformat (LA4) ist.

14. Maschine nach einem der Ansprüche von 1 bis 13, **dadurch gekennzeichnet, dass** die Steuereinheit (13) die Betätigungsmittel (20, 20a, 20b) derart steuert, dass eine Vorwärtsbewegung der ersten, bogenförmigen Fläche (18) über die vorbestimmte Höhe (H) hinaus, in Abhängigkeit vom jeweiligen Format, und eine geführte Rückzugsbewegung der Fläche (18) mit den Produktgruppen (4) ermöglicht wird, so dass während des Vorschubs der Produktgruppen (4) eine Verminderung der Beanspruchung erzielt wird, die durch die Kraft entsteht, die auf die Produktgruppen (4), die gerade auf dem Paddel (7) positioniert werden, durch die auf der ersten Zuführeinheit (3) angeordneten Produktgruppen (4) ausgeübt wird.

15. Maschine nach Anspruch 1, **dadurch gekennzeichnet, dass** die zweite Einheit (5) ferner beinhaltet:
- eine vorgegebene Anzahl von Paddeln (7);
- eine Unterteilung der Paddel (7) in zwei verschiedene Gruppen (7a, 7b), wobei jede Gruppe (7a, 7b) jeweils mit einem ersten Antriebssystem (6a) bzw. einem zweiten Antriebssystem (6b) verbunden ist, so dass die Paddel (7) wechselweise entlang des Endlospfades (P6) angeordnet sind;
- Mittel (8) zur Regulierung einer der Gruppen (7a) von Paddeln (7) im Verhältnis zur anderen Gruppe (7b), um zwei verschiedene Arbeitsstellungen zwischen den beiden Gruppen (7a, 7b) von Paddeln (7) zu definieren, genauer gesagt eine erste Position, in der die Paddel (7) der zwei Gruppen (7a, 7b) in gleichem Abstand zueinander stehen, um einen Arbeitsraum (S1) zur Aufnahme der Produktgruppen (4) zu bilden, und eine zweite Position, in der die Paddel (7) der zwei Gruppen (7a, 7b) paarweise nahe beieinander angeordnet sind, um einen zweiten Nutzaufnahmeraum (S2) zu bilden, der größer ist als der durch die erste Position definierte erste Aufnahmeraum (S1).

16. Maschine nach Anspruch 15, **dadurch gekennzeichnet, dass** in der zweiten Arbeitsstellung nur eine Gruppe (7b) von Paddeln (7) einen entsprechenden Raum (S) zur Aufnahme der Produktgruppen (4) bildet.

17. Maschine nach Anspruch 15, worin die Produktgruppen (4) mehrere Formate aufweisen, die entsprechend eines ersten Maßes (LA) verschieden sind und enthalten sind zwischen zumindest einem ersten, einlagigen Format und einem zweiten, doppellagigen Format umhüllter Produkte (2); wobei dieses erste und zweite Format jeweils unterteilt sind in zwei oder mehr Unterformate, die enthalten sind zwischen einem ersten, minimalen Unterformat (LA1), in dem jedes Produkt (2) einen ersten Durchmesser (D1) aufweist, und einem zweiten, maximalen Unterformat (LA2), in dem jedes Produkt (2) einen zweiten Durchmesser (D2) aufweist, der größer ist als der erste Durchmesser (D1), wobei die Maschine **dadurch gekennzeichnet ist, dass** in der ersten Arbeitsstellung jedes Paddel (7) der beiden Gruppen (7a, 7b) einen ersten Nutzaufnahmeraum (S1) bildet, der als Abstand zwischen zwei aufeinanderfolgenden Paddeln (7) definiert und dafür ausgelegt ist, den Durchgang und die Aufnahme des ersten Formates zu ermöglichen, einschließlich der entsprechenden Unterformate, die zwischen dem ersten, minimalen Unterformat (LA1) und dem zweiten, maximalen Unterformat (LA2) enthalten sind.

18. Maschine nach Anspruch 15, worin die Produktgruppen (A) mehrere Formate aufweisen, die entsprechend eines ersten Maßes (LA) verschieden sind und enthalten sind zwischen zumindest einem ersten, einlagigen Format und einem zweiten, doppellagigen Format umhüllter Produkte (2); wobei dieses erste und zweite Format jeweils unterteilt sind in zwei oder mehr Unterformate, die enthalten sind zwischen einem ersten, minimalen Unterformat (LA1), in dem jedes Produkt (2) einen ersten Durchmesser (D1) aufweist, und einem zweiten, maximalen Unterformat (LA2), in dem jedes Produkt (2) einen zweiten Durchmesser (D2) aufweist, der größer ist als der erste Durchmesser (D1), wobei die Maschine **dadurch gekennzeichnet ist, dass** in der zweiten Arbeitsstellung jedes Paddel (7) einer Gruppe (7b) einen zweiten Nutzaufnahmeraum (S2) bildet, der definiert ist als Abstand zwischen der arbeitenden Paddel (7) und der nächsten oder vorhergehenden Paddel (7), die Seite an Seite mit der nächsten oder vorhergehenden arbeitenden Paddel (7) angeordnet ist, und der dafür ausgelegt ist, den Durchgang und die Aufnahme des zweiten Formats zu ermöglichen, einschließlich der entsprechenden Unterformate, die zwischen dem ersten, minimalen Unterformat (LA1) und dem zweiten, maximalen Unterformat (LA2) enthalten sind.

19. Maschine nach Anspruch 15, **dadurch gekennzeichnet, dass** das erste Antriebssystem (6a) und das zweite Antriebssystem (6b) jeweils zumindest Folgendes beinhalten:
- ein Paar (9a, 9b) Endlosantriebsketten, die um ein entsprechendes Paar (10a, 10b) von Zahnrädern gelegt sind und die kinematisch miteinander und mit einem einzigen Motor (11) verbunden sind; wobei auf den Ketten (9a, 9b) jeweils die erste Gruppe (7a) bzw. die zweite Gruppe (7b) von Paddeln (7) montiert sind;
- die Regulierungsmittel (8), die zwischen dem Kettenpaar (9a, 9b) und dem einzigen Motor (11) wirken.

20. Maschine nach Anspruch 15, **dadurch gekennzeichnet, dass** das erste Antriebssystem (6a) und das zweite Antriebssystem (6b) jeweils Folgendes beinhalten:
- zwei Paare (9a, 9b) Endlosantriebsketten, die um zwei entsprechende Paare (10a, 10b) von Zahnrädern gelegt sind und die kinematisch miteinander und mit einem einzigen Motor (11) verbunden sind; wobei auf den Kettenpaaren (9a, 9b) jeweils die erste Gruppe (7a) bzw. die zweite Gruppe (7b) von Paddeln (7) montiert sind;
- die Regulierungsmittel (8), die zwischen den zwei Kettenpaaren (9a, 9b) und dem einzigen Motor (11) wirken.

21. Maschine nach den Ansprüchen 15 und 19, **dadurch gekennzeichnet, dass** die Regulierungsmittel (8) eine mechanische Kupplung (12) beinhalten, die auf dem Antriebssystem (6a) angeordnet ist und wirkt und die dafür ausgelegt ist, zwischen zwei separaten Status umzuschalten, genauer gesagt einem ersten Status, in dem die Kupplung (12) gleichzeitig den Antrieb auf beide Antriebssysteme (6a, 6b) überträgt, so dass sich die Gruppen (7a, 7b) von Paddeln (7) normal entlang des Endlospfades (P6) bewegen, und einem zweiten Status, in dem die Kupplung (12) keinen Antrieb auf das Antriebssystem (6b) überträgt, so dass die zugehörige Gruppe (7b) von Paddeln (7) stationär bleibt, während sich die Gruppe (7a) von Paddeln (7), die mit dem anderen Antriebssystem (6a) verbunden ist, derart bewegt, dass sich ihr relativer Abstand zu der Gruppe (7b) von Paddeln (7) zwischen den zwei entsprechenden Arbeitsstellungen verändert.

22. Maschine nach Anspruch 21, **dadurch gekennzeichnet, dass** die mechanische Kupplung (12) von Hand betätigt werden kann.

23. Maschine nach Anspruch 21, **dadurch gekennzeichnet, dass** die mechanische Kupplung (12) automatisch über ein Bedienfeld (13) zur Steuerung der Maschine (1) betätigt werden kann.

## Revendications

1. Une machine pour la fabrication de groupes de produits en rouleau, emballés et enveloppés dans une feuille de film d'emballage et consistant chacun en une pluralité de produits (2) regroupés ensemble dans une configuration dimensionnellement variable ; la machine (1) étant du type comprenant, le long d'une ligne d'alimentation (A), une première unité (3) pour transporter l'un après l'autre les groupes (4) de produits vers une deuxième unité (5) destinée à tourner et à regrouper l'un après l'autre une pluralité de groupes (4) de produits ; la deuxième unité (5) comprenant au moins un système d'entraînement (6), à boucle sans fin, supportant une pluralité de pales (7) saillant radialement par rapport à la ligne de parcours (P6) du système d'entraînement (6) ; chaque pale (7) étant destinée à former, avec celle qui suit, un espace (S) pour la réception d'un groupe (4) de produits au niveau d'une position de prélèvement dans laquelle la pale (7) est coplanaire à la première unité (3), et à tourner les groupes d'au moins un angle droit (α) dans la direction d'avancement (S6) du système d'entraînement (6) ; la machine (1) étant **caractérisée en ce que** :
- chacune des pales (7) de la deuxième unité (5) consiste en un élément qui est subdivisé en une section supérieure (16), constituant une partie qui supporte et pousse les groupes (4) de produits, et une section inférieure ouverte ;
- des moyens (17) prévus pour régler la profondeur (H7) de support des groupes (4) de produits sur les pales (7) en fonction du type de configuration, comprenant une surface arquée (18) agissant au moins le long d'une section arquée du parcours (P6) d'entraînement des pales (7) et au niveau des sections inférieures ouvertes de ces mêmes pales (7) entre la position susmentionnée de prélèvement des groupes (4) de produits, dans laquelle chaque pale (7) repose dans le même plan que la première unité (3), et la position de la pale (7) quand celle-ci a été tournée de l'angle droit (α) susmentionné.

2. La machine selon la revendication 1, **caractérisée en ce que** chaque pale (7) consiste en un élément profilé en « U » retourné où les deux jambes (14, 15) sont reliées au système d'entraînement (6) et où la section de raccordement (16) du « U » constitue la partie qui supporte et pousse les groupes (4) de produits.

3. La machine selon la revendication 1, **caractérisée en ce que** chaque pale (7) du premier groupe (7a) et du deuxième groupe (7b) consiste en un élément profilé en « L » tourné où la jambe verticale (15) est reliée au système d'entraînement (6a, 6b) respectif et où la jambe horizontale (16) du « L » forme au moins une partie de l'espace pour le prélèvement et le logement des groupes (4) de produits.

4. La machine selon la revendication 1, où les groupes (4) de produits (2) ont une pluralité de configurations définies par une deuxième dimension (H) définie par la hauteur ou la somme de hauteurs superposées des produits (2) en rouleau enveloppés, et comprises au moins entre une troisième sous-configuration minimum (LA3) dans laquelle chaque produit a une première hauteur (H1), et une quatrième sous-configuration maximum (LA4) dans laquelle chaque produit (2) a une deuxième hauteur (H2) qui est supérieure à la première hauteur (H1), la machine étant **caractérisée en ce que** chaque pale (7) consiste en un élément profilé en « U » retourné où les deux jambes (14, 15) sont reliées au système d'entraînement (6), et où la section de raccordement du « U » constitue la paroi (16) qui supporte et pousse les groupes (4) de produits ; les moyens (17) étant prévus pour régler la profondeur de support (H7) des pales (7) en fonction du type de configuration et agissant au moins le long d'une section arquée du parcours (P6) d'entraînement des pales (7), constituant l'autre partie qui supporte et arrête les groupes (4) de produits, entre la zone de prélèvement des groupes (4) de produits, où chaque pale (7) repose dans le même plan que la première unité (3), et la position de la pale (7) quand celle-ci a été tournée de l'angle droit (α).

5. La machine selon les revendications de 1 à 4, **caractérisée en ce que** les moyens (17) de réglage de la profondeur de support (H7) de chaque pale (7) comprennent :
- une surface arquée (18) positionnée et agissant au moins dans la section arquée du parcours (P6) au niveau de l'ouverture (16g) définie par chaque pale (7) qui passe ;
- une surface rectiligne (19), statique, définissant la base de chaque espace (S) de logement et raccordée à la surface arquée (18) ;
- des premiers moyens d'actionnement (20) pour mouvoir la surface arquée (18) le long des ouvertures (16g) entre deux ou plus positions opérationnelles, en fonction des configurations, comprises entre une première position opérationnelle avancée de profondeur minimum, dans laquelle la surface arquée (18) est essentiellement en contact avec la paroi (16) des pales (7) qui passent, et une deuxième position rentrée de profondeur maximum dans laquelle la surface arquée (18) est éloignée des parois (16) qui passent, de manière à faire varier la profondeur de support (H7) des pales (7) qui passent en fonction des configurations.

6. La machine selon les revendications 4 et 5, **caractérisée en ce que** la surface rectiligne (19) statique est placée à une distance (H3) de la paroi (16) de la pale (7) qui est inférieure à la hauteur (H1) de la troisième sous-configuration minimum (LA3).

7. La machine selon les revendications de 1 à 4, **caractérisée en ce que** les moyens (17) de réglage de la profondeur de support de chaque pale (7) sont positionnés sur la section arquée et le long d'une section opérationnelle arquée du parcours (P6), c'est-à-dire le long des sections actives, de manière à ce que la profondeur de support (H7) reste constante entre la zone de réception des groupes (4) de produits et la zone d'évacuation desdits groupes (4) de produits.

8. La machine selon les revendications de 1 à 4 et selon la revendication 7, **caractérisée en ce que** les moyens (17) de réglage de la profondeur (H7) de chaque pale (7) comprennent :
- une première surface arquée (18) positionnée et agissant dans la section arquée du parcours (P6) au niveau de l'ouverture (16g) de chaque pale (7) qui passe ;
- une deuxième surface rectiligne (19), supérieure et mobile, définissant la base de chaque espace (S) de logement et raccordée à la surface arquée (18) ;
- des moyens d'actionnement (20) pour mouvoir la surface arquée (18) et la deuxième surface (19) le long des ouvertures (16g) qui passent entre deux ou plus positions opérationnelles, en fonction des configurations, comprises entre une première position opérationnelle avancée de profondeur minimum, dans laquelle la première surface (18) et la deuxième surface (19) sont essentiellement en contact avec les parois (16) des pales (7) qui passent, et une deuxième position rentrée de profondeur maximum dans laquelle la première surface (18) et la deuxième surface (19) sont éloignées des parois (16), de manière à faire varier la profondeur de support (H7) de chaque pale (7) qui passe en fonction des configurations.

9. La machine selon la revendication 8, **caractérisée en ce que** les moyens d'actionnement (20) sont subdivisés en :
- des premiers moyens d'actionnement (20a) agissant sur la première surface arquée (18) de manière à la mouvoir entre les positions opérationnelles ; et
- des deuxièmes moyens d'actionnement (20b) agissant sur la deuxième surface rectiligne (19) de manière à la mouvoir en hauteur entre les positions opérationnelles, en synchronisation avec les premiers moyens d'actionnement (20a) afin de toujours maintenir la deuxième surface (19) perpendiculaire aux pales (7) qui passent.

10. La machine selon les revendications 8 et 9, **caractérisée en ce que** la première surface arquée (18) et la deuxième surface rectiligne (19) sont raccordées l'une à l'autre par une troisième surface de transition (21), flexible et de section tubulaire, qui forme un raccord télescopique coulissant entre les extrémités respectives de la première surface (18) et de la deuxième surface (19), jointes à la troisième surface (21) elle-même, et permettant le double réglage des première surface (18) et deuxième surface (19) en déterminant un coulissement desdites deux surfaces (18, 19) par rapport à la troisième surface (21) tubulaire et flexible.

11. La machine selon l'une quelconque des revendications de 5 à 10, **caractérisée en ce que** les moyens d'actionnement (20, 20a, 20b) peuvent être activés par une unité de contrôle (13) de la machine (1).

12. La machine selon l'une quelconque des revendications de 1 à 11, **caractérisée en ce que** la profondeur (H16) de la paroi (16) est au moins égale à la hauteur de la troisième sous-configuration minimum (LA3).

13. La machine selon l'une quelconque des revendications de 1 à 12, **caractérisée en ce que** la paroi (16) et la première surface arquée (18) dans la deuxième position rentrée de profondeur maximum ont une profondeur totale (H7) au moins égale à la quatrième sous-configuration maximum (LA4).

14. La machine selon l'une quelconque des revendications de 1 à 13, **caractérisée en ce que** l'unité de contrôle (13) commande les moyens d'actionnement (20, 20a, 20b) de manière à permettre un mouvement en avant de la première surface arquée (18), au-delà de la hauteur (H) prédéfinie, en fonction de la configuration, et un mouvement de retour guidé de cette même surface (18) avec les groupes (4) de produits de manière à ce que, alors que les groupes (4) de produits avancent, la sollicitation générée par la pression sur les groupes (4) de produits en cours de positionnement sur la pale (7), exercée par les groupes (4) de produits positionnés sur la première unité (3) d'alimentation, s'annule.

15. La machine selon la revendication 1, **caractérisée en ce que** la deuxième unité (5) comprend en outre :
- un nombre défini de pales (7) ;
- une subdivision des pales (7) en deux groupes (7a, 7b) distincts, chacun des groupes (7a, 7b) étant relié respectivement à un premier système d'entraînement (6a) et à un deuxième système d'entraînement (6b), de manière à ce que les pales (7) soient positionnées en alternance le long du parcours (P6) en boucle sans fin ;
- des moyens (8) servant à régler un des groupes (7a) de pales (7) par rapport à l'autre groupe (7b), de manière à définir deux positions opérationnelles relatives différentes entre les deux groupes (7a, 7b) de pales (7), à savoir, une première position dans laquelle les pales (7) des deux groupes (7a, 7b) sont espacées de façon égale afin de former un espace utile (S1) pour loger les groupes (4) de produits, et une deuxième position dans laquelle les pales (7) des deux groupes (7a, 7b) sont rapprochées entre elles par paires afin de former un deuxième espace utile (S2) de logement qui est plus large que le premier espace (S1) de logement défini par la première position.

16. La machine selon la revendication 15, **caractérisée en ce que** dans la deuxième position opérationnelle, seul un groupe (7b) de pales (7) forme un espace (S) respectif pour loger les groupes (4) de produits.

17. La machine selon la revendication 15, où les groupes (4) de produits ont une pluralité de configurations différentes selon une première dimension (LA) et comprises au moins entre une première configuration à couche simple et une deuxième configuration à couche double de produits (2) enveloppés ; chaque première et deuxième configuration étant subdivisée en deux, ou plus, sous-configurations comprises entre une première sous-configuration minimum (LA1) dans laquelle chaque produit (2) a un premier diamètre (D1), et une deuxième sous-configuration maximum (LA2) dans laquelle chaque produit (2) a un deuxième diamètre (D2) qui est supérieur au premier diamètre (D1), la machine étant **caractérisée en ce qu'**au niveau de la première position opérationnelle, chaque pale (7) des deux groupes (7a, 7b) définit un premier espace utile (S1) de logement, défini comme la distance entre deux pales (7) consécutives, destiné à permettre le passage et le logement de la première configuration, comprenant les sous-configurations respectives entre la première sous-configuration minimum (LA1) et la deuxième sous-configuration maximum (LA2).

18. La machine selon la revendication 15, où les groupes (4) de produits ont une pluralité de configurations différentes selon une première dimension (LA) et comprises au moins entre une première configuration à couche simple et une deuxième configuration à couche double de produits (2) enveloppés ; chaque première et deuxième configuration étant subdivisée en deux, ou plus, sous-configurations comprises entre une première sous-configuration minimum (LA1) dans laquelle chaque produit (2) a un premier diamètre (D1), et une deuxième sous-configuration maximum (LA2) dans laquelle chaque produit (2) a un deuxième diamètre (D2) qui est supérieur au premier diamètre (D1), la machine étant **caractérisée en ce qu'**au niveau de la deuxième position opérationnelle, chaque pale (7) d'un groupe (7b) forme un deuxième espace utile (S2) de logement, défini comme la distance entre la pale (7) opérationnelle de logement et la pale (7) suivante ou précédente accolée à la pale (7) opérationnelle de logement suivante ou précédente, destiné à permettre le passage et le logement de la deuxième configuration, comprenant les sous-configurations respectives entre la première sous-configuration minimum (LA1) et la deuxième sous-configuration maximum (LA2).

19. La machine selon la revendication 15, **caractérisée en ce que** le premier système d'entraînement (6a) et le deuxième système d'entraînement (6b) comprennent chacun au moins :
- une paire (9a, 9b) de chaînes d'entraînement sans fin enroulées autour d'une paire (10a, 10b) respective de roues dentées cinématiquement reliées entre elles et à un moteur unique (11) ; les chaînes (9a, 9b) supportant, respectivement, le premier groupe (7a) et le deuxième groupe (7b) de pales (7) ;
- les moyens de réglage (8) agissant entre la paire de chaînes (9a, 9b) et le moteur unique (11).

20. La machine selon la revendication 15, **caractérisée en ce que** le premier système d'entraînement (6a) et le deuxième système d'entraînement (6b) comprennent chacun :
- deux paires (9a, 9b) de chaînes d'entraînement sans fin enroulées autour de deux paires (10a, 10b) respectives de roues dentées cinématiquement reliées entre elles et à un moteur unique (11) ; les paires (9a, 9b) de chaînes supportant, respectivement, le premier groupe (7a) et le deuxième groupe (7b) de pales (7) ;
- les moyens de réglage (8) agissant entre les deux paires de chaînes (9a, 9b) et le moteur unique (11).

21. La machine selon les revendications 15 et 19, **caractérisée en ce que** les moyens de réglage (8) comprennent un embrayage mécanique (12) positionné et agissant sur le système d'entraînement (6a) et destiné à commuter entre deux états distincts, dans le premier desquels l'embrayage (12) transmet simultanément le mouvement aux deux systèmes d'entraînement (6a, 6b), entraînant ainsi les groupes (7a, 7b) de pales (7) à se déplacer normalement le long du parcours (P6) en boucle sans fin, et dans le deuxième desquels l'embrayage (12) ne transmet pas le mouvement au système d'entraînement (6b), de manière à maintenir le groupe (7b) respectif de pales (7) arrêté tandis que le groupe (7a) de pales (7) relié à l'autre système d'entraînement (6a) se déplace de manière à faire varier sa distance relative par rapport au groupe (7b) de pales (7) entre les deux positions opérationnelles relatives.

22. La machine selon la revendication 21, **caractérisée en ce que** l'embrayage mécanique (12) peut être actionné manuellement.

23. La machine selon la revendication 21, **caractérisée en ce que** l'embrayage mécanique (12) peut être actionné automatiquement depuis un panneau (13) de commande de la machine (1).
